# EUROPEAN PATENT APPLICATION

(11) **EP 2 778 637 A1**
(43) Date of publication of application: **17.09.2014**
(21) Application number: 14020029.6
(22) Date of filing: 12.03.2014
(51) Int. Cl.: G01J 5/06, G01J 5/08, G01J 5/12, B60H 1/00, G05D 23/27

(54) **Lobed aperture radiant sensor**

(30) Priority: 13.03.2013 US 201361779077 P; 23.01.2014 US 201414161757
(71) Applicant: Kelsey Hayes Company, Livonia, MI 48150 (US)
(72) Inventor: Todd, Ruiter, Ettrick, Wisconsin 54627 (US)
(74) Representative: Wagner, Karl H.

(57) **Abstract**

A radiant sensor includes a modified, e.g. lobed, aperture for modifying the sensor response to heat sources with its field of view to achieve a mean radiant temperature measurement.

## Description

### Cross Reference to Related Applications

This application claims priority to and the benefit of U.S. Provisional Application Serial No. 61/779,077, filed March 13, 2013, entitled LOBED RADIANT SENSOR, assigned attorney docket number BCS-022083 US PRO. The above-identified provisional application is incorporated herein by reference in its entirety for all purposes.

### Field of the Invention

The present invention is directed to radiant sensors and is more particularly directed to a radiant sensor with a modified aperture for use in vehicle cabins.

### Background

The heating ventilating and air conditioning (HVAC) systems used in motor vehicles today often include electronic, closed-loop control of the temperature within the vehicle. In some systems, temperature control is augmented with humidity control and more sophisticated evaluation of heat loading and relative conditions inside and outside of the vehicle cab. In such systems, a unified 'comfort level' control may be provided in place of the more traditional 'temperature level' control. The occupant of the vehicle merely adjusts the 'comfort level' control to a desired setting, and the system continually adjusts temperature and other environmental factors to achieve and maintain that desired comfort level.

The electronic, closed loop controls include sensors for monitoring conditions within the vehicle, and sensor readings from the sensors are fed back into the control process where 'comfort level' is calculated from the sensor measurements. At least one temperature sensor is included in such systems.

Temperature sensors are commercially available that are generally suitable for this purpose, including for example the Melexis MLX90615 infrared temperature sensor. The Melexis sensor includes an infrared (IR) sensitive thermopile detector chip and a signal conditioning chip integrated into the same TO-46 can package. The TO-46 can has a low cylindrical shape having a flat top and bottom. Signal leads protrude from the bottom. A central, circular aperture is formed in the top to expose the thermopile sensor element to infrared radiation emanating from objects within the field of view defined by the aperture. An optical filter is included between the aperture and the thermopile sensor element to block light within the visible spectrum and thereby render the sensor insensitive to visible light. The temperature reading provided at the output of the sensor is a single, time-varying value reflecting the composite or integrated amount of infrared radiation received over the entire field of view of the sensor.

The sensor is desirably located and pointed so that the temperature reading provided by the sensor accurately reflects the mean temperature experienced by the occupants of the vehicle. One location might be an overhead console, which commands a wide view of the vehicle cab interior, although not the headliner. Unfortunately, the overhead console location is inconveniently remote from the HVAC control module, which is integrated into the dashboard of the vehicle. Installation of the temperature sensor in the overhead console would therefore create two installation locations, with a consequent need for wiring between them.

Thermal sensors can be and have been integrated into the HVAC control module. In such installations, the sensor looks out through a hole in the bezel covering the front of the module. The field of view afforded by this location, however, is not ideal.

### Summary of the Invention

The present invention provides a radiant sensor having a lobed field of view that distributes the sensitivity of the sensor across a greater number of surfaces within the vehicle cabin.

In accordance with an example embodiment of the present invention, a radiant sensor is provided comprising a lobed aperture for limiting the sensor field of view to achieve a mean radiant temperature measurement. The radiant sensor has an aperture and provides an output signal representing the amount of radiant energy seen by said radiant sensor through said aperture. The sensor has a lobed aperture to limit the sensor field of view and thereby attenuate sensor response to heat sources within central portions of the sensor field of view.

In accordance with another aspect of the present invention, a process is described for providing a radiant sensor for a vehicle having a cabin. The process includes the step of selecting a location to mount a radiant sensor within the cabin. The field of view that the radiant sensor will see when mounted in the selected location is characterized. Regions of the field of view are identified that will disproportionately affect the sensor reading provided by the radiant sensor. The response of the sensor to infrared energy emanating from the identified regions is then modified so that the sensor reading provided by said radiant sensor more closely reflects the radiant energy within said cabin. The sensor is mounted at the selected location in the vehicle and in an orientation relative to the field of view so that the modified response of the sensor is aligned with the identified regions.

### Brief Description of the Drawings

The foregoing and other features and advantages of the present invention will become apparent to those skilled in the art to which the present invention relates upon reading the following description with reference to the accompanying drawings, in which:
Fig. 1 is a sectional elevation view of a prior art thermal sensor employed in sensing temperature within a vehicle cabin;
Fig. 2 is perspective view of a commercially available thermal sensor that might be used in the application illustrated in Fig. 1;
Fig. 3 illustrates the field of view of the sensor of Fig. 1, when installed in the center dashboard of a vehicle;
Fig. 4 is a perspective view of a thermal sensor in accordance with one example embodiment of the present invention;
Fig. 5 is a response map for the sensor of Fig. 4, showing the lobed response of the sensor to IR (heat) sources located within the hemispherical field of view of the sensor;
Fig. 6 shows the field of view of Fig. 3 having imposed thereon a reticule derived from the response map of Fig. 5;
Fig. 7 illustrates the field of view of the sensor of Fig. 1, when installed in or near the headliner of a vehicle;
Fig. 8 is a top view of a sensor, in accordance with another example embodiment of the present invention, that may be installed in or near the headliner of a vehicle; and,
Fig. 9 shows response curves for the Fig. 2 sensor and the Fig. 8 sensor to heat sources disposed within a horizontal slice of the field of view of the sensor.

### Detailed Description

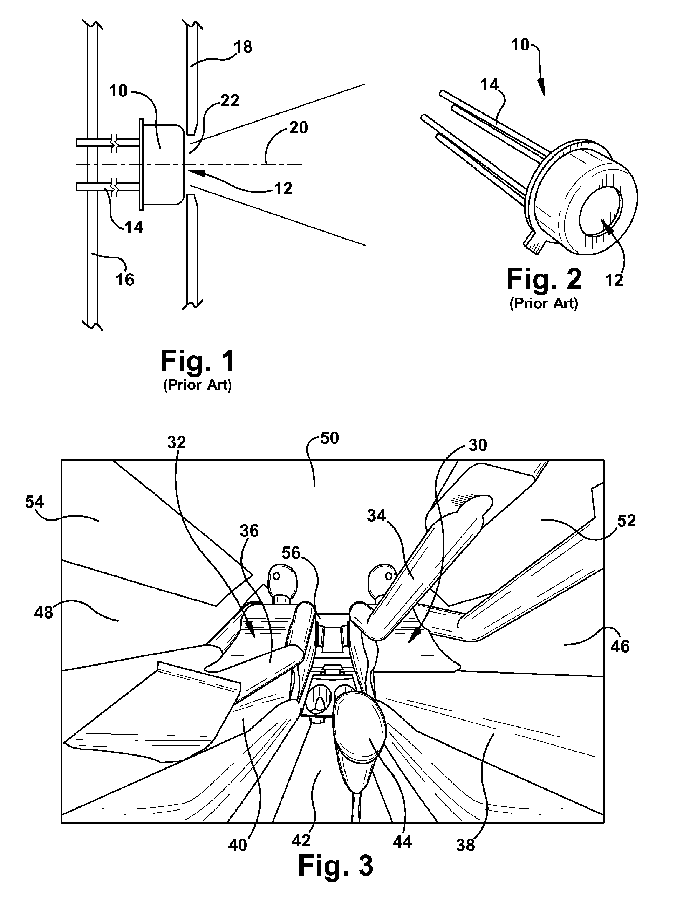

Vehicle climate control system may use a radiant sensor for measuring the temperature inside the vehicle cabin. Figs. 1 and 2 show an example radiant sensor 10 that might be used for this purpose. The sensor may be the Melexis MLX90615 IR temperature sensor. The sensor has a generally cylindrical shape. A circular aperture 12 on the top of the sensor exposes the thermopile sensor element of the sensor to IR energy passing through the aperture, and four connection pins 14 on the bottom of the sensor provide a means of mounting the sensor while also electrically connecting it with other vehicle electronics.

The sensor 10 is mounted via its pins 14 on a printed circuit board 16 located within an HVAC control head, not separately shown. The connection pins 14 are soldered to circuit traces on the printed circuit board and thereby connected to a microcontroller and other electronics within the HVAC control head. An optical filter, not separately numbered, is contained within the sensor to block light within the visible spectrum so that the sensor output only reflects the IR component of the incident radiation. The optical filter is disposed immediately behind sensor aperture 12 and above the thermopile sensor element. The thermopile sensor element that comprises the main transducer of the sensor is located behind the optical filter, and thus the thermopile sensor element is spaced back from the optical filter by some short distance and from aperture 12 by a somewhat greater distance. The transverse spatial extent of the IR sensitive surface of the thermopile sensor element is quite a bit smaller than the diameter of sensor aperture and, in the case of the Melexis sensor, has a diamond shape.

Aperture 12 of radiant sensor 10 faces a bezel 18 that covers the front of the HVAC control head. The optical axis 20 of radiant sensor 10 is normal to the plane of the IR sensitive surface of the thermopile sensor element at the center of the IR sensitive surface of the thermopile sensor element. Optical axis 20 passes through the center of sensor aperture 12 and is further aligned with an aperture 22 in bezel 18. The radiant sensor measures the radiant temperature ("RT") of the objects it "sees" through bezel aperture 22. Bezel aperture 22 is larger than sensor aperture 12, whereby the bezel does not constrain the field of view of sensor aperture 12.

Radiant sensor 10 responds to the infrared energy it receives over its entire exposed sensitive surface and provides at its output a single, time-varying value representing the composite response of the sensor over the entire exposed sensitive surface. Stated differently, sensor 10 averages the IR energy it receives over the entire field of view of the sensor as seen through bezel aperture 22, and provides an output reflecting the mean value of the energy. Ideally, that value should be an accurate measure of the mean value of the infrared energy emitted from most or all of the surfaces within the vehicle that contribute to the temperature perceptions of the occupants. For a conventional sensor, however, the output of a sensor installed in the center-dashboard area will not closely track this ideal value. Although the response characteristic of the sensor, itself, to objects in the field of view is both proportionate and circularly symmetrical around the optical axis, the actual arrangement of objects in the field of view seen through the bezel aperture is neither proportionate nor symmetrical.

When installed in a center-dashboard location of the HVAC control head, the field of view of radiant sensor 10 as it looks out through bezel aperture 22 encompasses a rearward view through the vehicle cabin, more or less along the centerline of the vehicle. A model of that field of view is shown in Fig. 3. In Fig. 3, a driver 30 and passenger 32 are shown with respective inboard arms 34 and 36 and inboard legs 38 and 40. Also visible is the center console 42 of the vehicle, from which protrudes the transmission shifter (PRNDL stick) 44. Driver and passenger doors are indicated at 46 and 48, respectively. The headliner 50 dominates the upper portion of the field of view. Side windows 52 and 54 are also within the field of view, as is the rear window 56.

As can be seen in Fig. 3, certain objects in the field of view extend over a disproportionate amount of the entire field of view. Objects in the lower center of the field of view, such as the inboard arms 34, 36 and legs 38, 40 of the vehicle occupants, the center console 42 and the transmission shifter 44 are disproportionately large in the field of view. To the extent that these objects have higher or lower temperatures than the mean temperature of other cabin surfaces, they will disproportionally affect the temperature reading provided by radiant sensor 10 for the vehicle cabin.

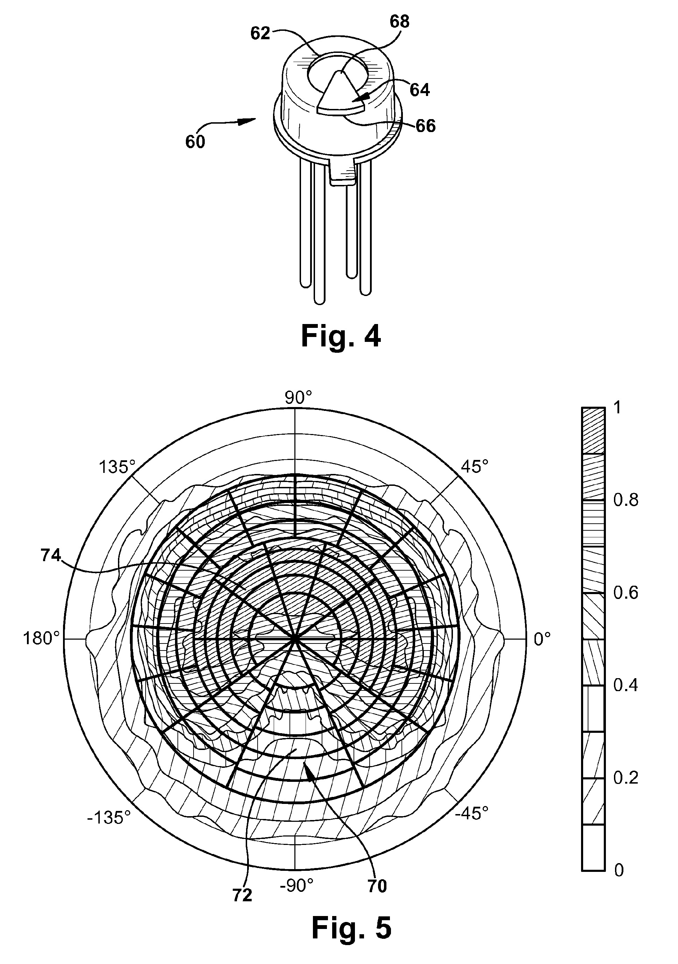

The present invention provides a lobed aperture for the sensor to more accurately yield a mean radiant temperature ("MRT") within the entire cabin environment. Fig. 4 shows a sensor, made in accordance with an example embodiment of the present invention, having a lobed aperture. The sensor 60 is similar in most respects to sensor 10, and may in fact be a modified version of the Melexis MLX90615 sensor. Thus, sensor 60 contains a thermopile sensor element and an optical filter mounted in a TO-46 can and having a circular sensor aperture 62. Sensor 60 also incorporates a wedge-shaped mask 64, however, to attenuate the response of the sensor to certain portions of the otherwise circularly symmetrical field of view of the sensor.

As shown in the example embodiment of Fig. 4, mask 64 is wedge shaped, having a generally triangular configuration including a wide base 66 and pointed tip or vertex 68. Vertex 68 subtends an angle of approximately forty-five degrees (45°). Base 66 is attached to the top of the TO-46 housing of sensor 60 whereby the plane of mask 64 is generally parallel to the plane of the IR sensitive surface of the thermopile sensor element contained within sensor 60. Vertex 68 of mask 64 projects radially inward across the open sensor aperture 62 toward the optical center of the sensor, with the very point of tip 68 resting at or perhaps slightly past the optical axis of sensor 60. Thus, as shown in Fig. 4, mask 64 covers a pieshaped sector of aperture 62, extending across perhaps one-eighth (45/360) of the entire aperture and thus converting the circular aperture into a lobed aperture. Because mask 64 is mounted on top of the sensor, the mask is axially separated by a short distance from the IR sensitive surface of the thermopile sensor element, creating a shadowing effect that is directionally sensitive. That is, the IR sensitive surface of the thermopile sensor element will lie within the shadow of the mask for IR sources in the lower center of the field of view, but will not lie in the shadow of the mask for IR sources to that are located off-axis to the left or right or top.

Mask 64 may be constructed of any convenient material. In the example embodiment, mask 64 is aluminum, whereby mask 64 is reflective to radiation at infrared wavelengths. Since the mask is IR reflective, the mask will not absorb and re-radiate the impinging IR energy. Mask 64 is affixed to the top surface of sensor 60 via soldering in the illustrated embodiment, however it may instead be attached by welding, brazing, gluing, or with some other suitable process. Moreover, the need for such attachment may be obviated by forming sensor aperture 62 integrally with the housing for the sensor. A forming die could be used to stamp out the aperture, with the die being formed so as to leave a mask-shaped portion of the cover in place when the rest of the aperture is cut out and removed.

As previously stated, sensor 10 of Figs. 1 and 2 has a circularly symmetrical response characteristic. That is not the case with the sensor 60 of Fig. 4, due to the presence of the axially separated mask and the consequent lobed shape of the aperture. The altered response characteristic is illustrated in Fig. 5, which is a sensor response map showing measurements of sensor response to point heat sources within the field of view of the sensor. The map value at each point in the Fig. 5 map represents the output of the sensor when a point heat source is positioned at that point in the field of view, where the values are normalized so that the maximum response has a unity (1) value. As shown in Fig. 5, the presence of mask 64 greatly attenuates the IR response of the sensor in a wedge-shaped region 70 of the field of view, where region 70 is aligned with and defined by the location and size of mask 64 in sensor aperture 62.

The nonsymmetrical lobed response of sensor 62 may be exploited beneficially to improve the accuracy of the sensor reading in a vehicle temperature sensing application. To this end, sensor 60 is rotationally oriented on its printed circuit board 16 of Fig. 1 to block the lower center portion of the cabin image. To achieve the desired masking, sensor 60 is oriented on printed circuit board 16 so that base 66 of mask 64 is at the bottom of aperture 62 when the HVAC control head is installed in the dashboard of the vehicle. When thus oriented, the masked lower center portion of sensor aperture 62 will align with the lower center portion of the field of view through the bezel aperture (as viewed in Fig. 3). The sensor will thus be relatively insensitive to the infrared emissions from objects within the lower center portion of the field of view, including the inboard arms and legs of the front vehicle occupants and the center console and transmission shifter. Consequently, the thermal measurement output of the sensor will more accurately reflect the mean value of the infrared energy emitted from most or all of the surfaces within the vehicle that contribute to the temperature perceptions of the occupants.

The size, shape, and orientation of mask 64 may be selected to better adapt the response of the sensor to the requirements of a particular application. In each such application, a candidate mask design will first be developed based on a priori estimates of the image area to be attenuated. The resulting candidate mask design will be tested to produce an associated response map of the type shown in Fig. 5. The response map will then be correlated to the known field of view of the sensor to determine whether adjustments to the candidate mask design are necessary or desirable.

For example, a reticule may be provided to compare actual and desired response more easily. This approach is illustrated in Fig. 5, wherein the response map has a reticule imposed on it. The reticule divides the response map into a grid of adjacent curved blocks each having iso-angular and iso-radial boundaries with respect to the optical center of the sensor. The boundaries of each block are lengthened and shortened so that each block represents a portion of the field of view that contributes an equal amount to the overall response of the sensor. Various numerical methods may be used to calculate the contributions within each block, taking into account the non-linear (spherical) geometry of regions within the field of view and normalizing the contribution of each region with the actual sensor response in that region. For example, one could employ a Fibonacci lattice as described in a paper by Álvaro González entitled "Measurement of Areas on a Sphere Using Fibonacci and Latitude-Longitude Lattices", International Association for Mathematical Geosciences, Math Geosci (2010) 42:49-64.

In the Fig. 5 example reticule, each block is sized to contribute approximately 1% to the overall sensor response, but greater or lesser granularity may be applied, as desired. Fig. 5 shows a total of 89 blocks, covering roughly 89% of the sensitive area of the sensor. In areas of low sensor response the blocks are relatively large (e.g. block 72); in areas of high sensor response the blocks are relatively small (e.g. block 74).

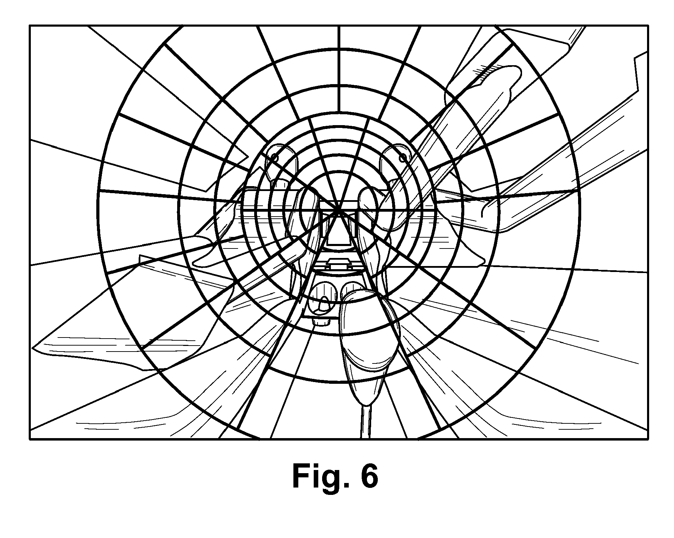

When this reticule is superimposed on the actual field of view of the sensor in the intended application, the individual blocks of the reticule can simply be counted in particular areas of interest thereby to compare the response of the sensor to the desired response. In Fig. 6, for example, the reticule derived from the response map of Fig. 5 has been superimposed on the sensor field of view previously seen in Fig. 3. From Fig. 6 it can be seen that the sensor response will be a composite of roughly 23% (perhaps 23 blocks) of headliner response, 24% (perhaps 24 blocks) of front vehicle occupant chest area response, 5% (perhaps 5 blocks) front door liner response, etc. This combination of thermal responses is a good approximation of the optimum thermal reading from the cabin, and accordingly the mask 64 is appropriate and the design is verified. If a different response were desired, different candidate masks could be created, characterized, and analyzed in an iterative fashion to converge on an optimal design.

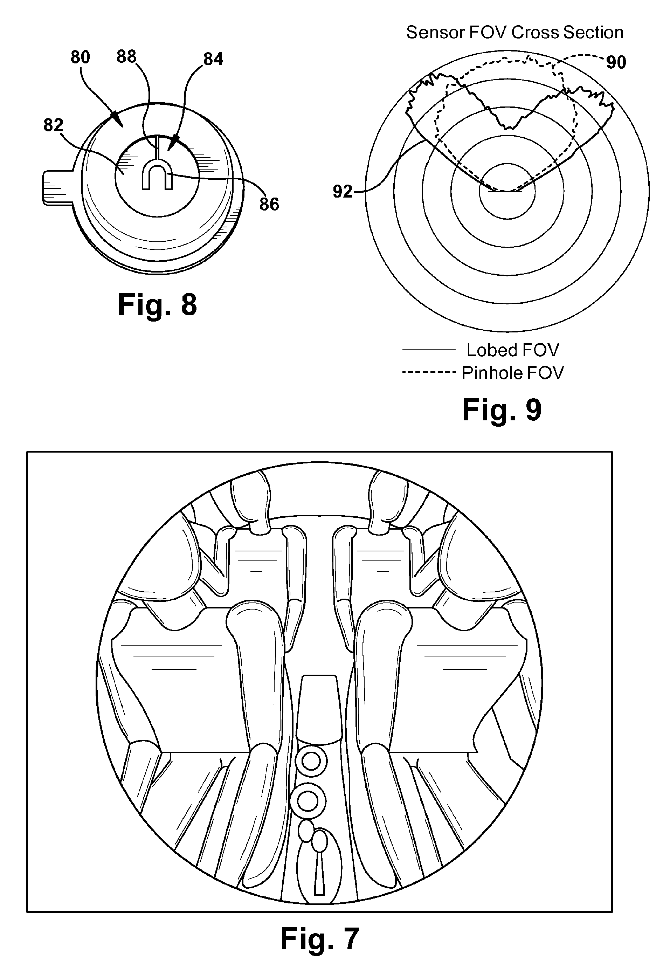

Fig. 7, for example, shows the field of view of the sensor when the sensor is installed behind an aperture in or near the headliner of the vehicle. In the Fig. 7 field of view, the appearance of occupants and vehicle components is quite different than in the Fig. 3 field of view. Thus, a different vehicle mask may be appropriate, such as the mask illustrated in Fig. 8. In Fig. 8, a sensor 80 has a sensor aperture 82, and a mask 84 is disposed over the aperture. In Fig. 8, mask 84 takes the form of a thin, wire-like upside-down horseshoe shape 86 suspended over aperture 82 by a support 88. Horseshoe mask 86 has a height and width equal to approximately one third of the diameter of sensor aperture 82.

Fig. 9 illustrates the modified response of sensor 80. Fig. 9, unlike Fig. 5, is not a sensor response map over the hemi-spherical field of view of the sensor. Rather, Fig. 9 shows the response 92 of the sensor 80 to heat sources within a select slice of that hemisphere, such as the horizontal plane, and located at different angles off the optical axis of the sensor. The lobed nature of the sensor response is apparent here, in contrast with the symmetrical response 90 of the unmodified sensor of Fig. 2. In the lobed response 92, the sensitivity of sensor 80 to on-axis heat sources is significantly attenuated versus the symmetrical, and unattenuated, response 90 of unmodified sensor 10. The lobed response arises from the lobed nature of the modified aperture, which in turn arises from the mask obscuring a portion of the center of the sensor aperture. Again, the intent and goal of this mask and sensor is to improve the sensor response by reducing the effect of a single object disproportionately effecting the overall measurement.

It should also be noted that a radiant sensor with a lobed aperture in accordance with the present invention may be designed to hide objects from the field of view that are expected to be a source of thermal noise.

In the embodiments described above, the mask is IR reflective, is essentially external to the sensor, and covers only part of the sensor aperture. In another embodiment, a mask might be used that is IR transparent in some areas and partially or totally IR reflective or opaque in other areas. Indeed, it is anticipated that, in higher volume applications, the mask may be integrated with the optical light filter by, for example, deposition of aluminum or some other IR opaque material on a sector of the surface of the optical light filter. The filter will then be installed in a known angular alignment within the housing of the sensor, so that the mask may be aligned in a field of view merely by proper rotational alignment of the pins of the sensor on the printed circuit board. By consolidating the mask with the optical filter, the mask will be brought closer (as measured along the optical axis of the sensor) to the IR sensitive surface of the thermopile sensor element, reducing the directionality of the IR shadowing provided by the mask. This may be desirable or undesirable in a given application, and sufficient axial spacing will be provided in a given application to provide the degree of mask directionality that is appropriate for the application.

From the above description of the invention, those skilled in the art will perceive improvements, changes and modifications. Such improvements, changes and modifications within the skill of the art are intended to be covered by the appended claims.

## Claims

1. A radiant sensor having an aperture and providing an output signal representing the amount of radiant energy seen by said radiant sensor through said aperture, said sensor having a lobed aperture for limiting the sensor field of view thereby to attenuate sensor response to heat sources within central portions of the sensor field of view.

2. A radiant sensor as set forth in claim 1, comprising a sensor element having a surface that is sensitive to infrared energy, and a housing encasing said sensor element, said housing having an aperture for admitting infrared energy to said surface of said sensor element, wherein said aperture has a lobed shape, said aperture being spaced from said surface to provide directional shadowing of said surface.

3. A radiant sensor as set forth in claim 2, wherein said aperture in said housing has a restricted central portion thereby to provide an aperture with a lobed shape.

4. A radiant sensor as set forth in claim 2, wherein said sensor element further includes an optical filter for blocking visible light passing through said housing aperture from reaching said surface that is sensitive to infrared energy, and wherein said optical filter has an IR-attenuating portion to create said lobed shape.

5. A radiant sensor as set forth in claim 2, wherein said aperture in said housing has a generally circular shape with an IR-attenuating mask projecting radially toward the center of said generally circular shape.

6. A radiant sensor as set forth in claim 5, wherein said mask is reflective to infrared energy.

7. A radiant sensor as set forth in claim 5, wherein said IR-attenuating mask is generally wedge shaped.

8. A radiant sensor for a vehicle having a cabin, comprising an infrared sensor having a sensor aperture with a lobed shape for admitting radiant energy into said sensor, a mounting surface for retaining said infrared sensor within said vehicle in an orientation such that said sensor aperture faces the cabin of said vehicle and that said lobes of said lobed shape align with cabin areas of interest, and a bezel covering said sensor and said board, said bezel having an aperture therein aligned with said sensor aperture.

9. A radiant sensor as set forth in claim 8, wherein said mounting surface comprises a printed circuit board to which said infrared sensor is mounted, said printed circuit board having circuit traces for connecting said infrared sensor to other devices including at least a microcontroller.

10. A radiant sensor as set forth in claim 8, wherein said infrared sensor includes a sensor element having a surface that is sensitive to infrared energy and a housing encasing said sensor element, said housing having an aperture for admitting infrared energy to said surface of said sensor element, wherein said aperture has a lobed shape and is spaced from said surface to provide directional shadowing of said surface.

11. A radiant sensor as set forth claim 10, wherein said aperture in said housing has a generally circular shape with an IR-attenuating mask projecting radially toward the center of said generally circular shape, said mask blocking the bottom center portion of said aperture in said housing whereby said mask selectively blocks infrared energy from the bottom center portion of the vehicle cabin.

12. A radiant sensor as set forth in claim 11, wherein said mask has a triangular shape having a base located near the boundary of said generally circular shape and a vertex projecting towards the center of said circular shape.

13. A radiant sensor as set forth in claim 8, wherein said infrared sensor includes a sensor element having a surface that is sensitive to infrared energy and an optical filter for blocking visible light from reaching said surface, and wherein said optical filter has an IR-attenuating portion to create said lobed shape.

14. A radiant sensor as set forth in claim 8, said sensor providing an output signal representing the amount of radiant energy seen by said radiant sensor through said sensor aperture, wherein certain things within the cabin extend across a disproportionate region of the field of view through said bezel aperture, and wherein said mask is sized and positioned to attenuate selectively infrared radiation coming from at least part of said disproportionate region so that said output signal provided by said radiant sensor more closely reflects the mean radiant temperature within said cabin.

15. A process of providing a radiant sensor for a vehicle having a cabin, comprising the steps of:
selecting a location to mount a radiant sensor within said cabin;
characterizing the field of view that the radiant sensor will see when mounted in the selected location;
identifying regions of the field of view that will disproportionately affect the sensor reading provided by the radiant sensor;
modifying the response of the sensor to infrared energy emanating from the identified regions so that the sensor reading provided by said radiant sensor more closely reflects the mean radiant temperature within said cabin; and,
mounting the sensor at the selected location in the vehicle and in an orientation relative to the field of view so that the modified response of the sensor is aligned with the identified regions.
